(19) Europäisches Patentamt
European Patent Office
Office européen des brevets

(11) **EP 4 387 084 A1**

(12) **DEMANDE DE BREVET EUROPEEN**

(43) Date de publication:
**19.06.2024   Bulletin 2024/25**

(21) Numéro de dépôt: **23212614.4**

(22) Date de dépôt: **28.11.2023**

(51) Classification Internationale des Brevets (IPC):
**H02P 27/08** (2006.01)

(52) Classification Coopérative des Brevets (CPC):
**H02P 27/08**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité:  **12.12.2022   FR 2213155**

(71) Demandeur: **IFP Energies nouvelles**
**92500 Rueil-Malmaison (FR)**

(72) Inventeurs:
- **VIDAL-NAQUET, Fabien**
  **92852 RUEIL-MALMAISON CEDEX (FR)**
- **LEPAGE, Thierry**
  **92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(54) **PROCÉDÉ DE COMMANDE D'UNE MACHINE ÉLECTRIQUE PILOTÉE PAR UN ONDULEUR POURVU D'UNE PLURALITÉ DE BRAS DE COMMUTATION**

(57)     La présente invention concerne un procédé de commande d'une machine électrique (MEL) pilotée par un onduleur (OND) pourvu de bras de commutation. La commande étant réalisée à une fréquence de découpage. Pour ce procédé, on détermine une fréquence de régulation, et à cette fréquence de régulation, on détermine (PWM VECT) un vecteur de N rapports cycliques de chaque bras de commutation, puis on réalise un démultiplexage (DMX) de ce vecteur pour déterminer un rapport cyclique de chaque bras de commutation à la fréquence de découpage. On commande (MOD) ensuite l'onduleur (OND) en appliquant à la fréquence de découpage les rapports cycliques démultiplexés.

[Fig 4]

EP 4 387 084 A1

**Description**

**Domaine technique**

La présente invention concerne un procédé de commande d'une machine électrique tournante, de préférence une machine électrique synchrone, par exemple du type synchro-réluctante ou synchrone à aimants permanents.

L'invention concerne également un système de commande mettant en oeuvre un tel procédé.

Il est connu d'avoir recours à des machines électriques tournantes telles que des machines électriques synchrones à aimants permanents ou des machines synchro-réluctantes, en particulier des machines synchro-réluctantes assistées d'aimants permanents. De telles machines électriques sont, par exemple, utilisées dans le domaine de la propulsion, par exemple pour la génération de couples moteurs à bord d'un véhicule tel qu'un véhicule automobile.

Le document FR 3 051 296 A1 décrit, par exemple, une machine synchro-réluctante assistée d'aimants permanents.

Afin d'augmenter la densité de puissance des machines électriques synchrones dans le domaine du transport, ceux-ci fonctionnent à des fréquences électriques et fréquences de rotation de plus en plus élevées. Cette montée en fréquence électrique des moteurs, pilotés par des électroniques de puissance dont les microprocesseurs sont soumis à d'importantes contraintes de coût et donc de puissance de calcul, peut conduire à l'apparition de limitations à la montée en fréquence de « découpage ».

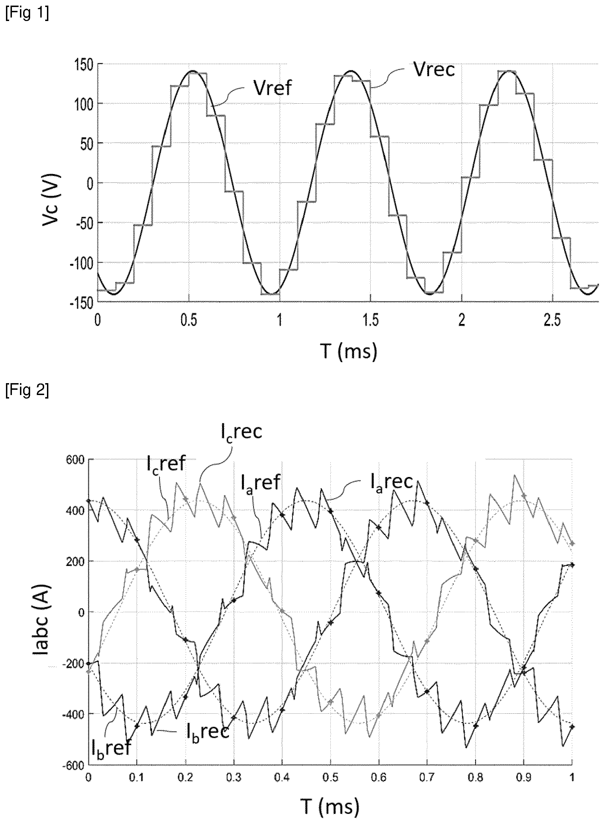

En effet, le procédé dit de « découpage » (ou Modulation à Largeur d'impulsion, MLI ou PWM de l'anglais Puise Width Modulation) repose sur l'idée qu'une sinusoïde (en l'occurrence de tension de commande d'une machine électrique) peut être « découpée » en une suite de valeurs constantes, comme illustré sur la figure 1. La figure 1 est une courbe de la tension Vc en V en fonction du temps T en ms. La courbe Vref est la courbe de tension sinusoïdale optimale, et la courbe Vrec est une courbe de tension obtenue par une méthode de découpage qui approxime la courbe de référence. On peut constater que l'approximation de la courbe de référence dépend de la période de découpage.

De manière évidente, si la fréquence électrique d'une machine électrique augmente, le nombre de valeurs par période électrique se réduit, ce qui conduit à terme à l'obtention de courants dans les moteurs qui sont fortement non sinusoïdaux. On considère en général qu'un facteur d'environ 10 entre la fréquence de découpage et la fréquence électrique du moteur est a minima nécessaire à son contrôle. Par ailleurs, l'émergence de modules de puissance « wide band gap » (ou WBG pouvant être traduit par semi-conducteur à large bande), qui génèrent nettement moins de pertes à chaque période de découpage, pousse à envisager d'utiliser des facteurs encore supérieurs, de l'ordre de 20 à 30. Finalement, la fréquence de découpage ciblée peut facilement atteindre 30 à 50 kHz, ce qui représente un défi pour les microprocesseurs classiquement exploités par exemple dans l'automobile, qui ne peuvent faire face normalement à une telle fréquence de calculs.

La figure 2 illustre un exemple de courant Iabc dans les phases a b et c d'une machine électrique en A en fonction du temps T en ms. La figure 2 concerne pour une machine électrique triphasée opérant à une fréquence électrique de 1,5 kHz dans le cas d'une fréquence de découpage de 10 kHz. La courbe $I_a$ref correspond à la courbe sinusoïdale de référence pour le courant dans la phase a, et la courbe $I_a$rec correspond à la courbe sinusoïdale obtenue par une fréquence de découpage pour le courant de la phase a. La courbe $I_b$ref correspond à la courbe sinusoïdale de référence pour le courant dans la phase b, et la courbe $I_b$rec correspond à la courbe sinusoïdale obtenue par une fréquence de découpage pour le courant de la phase b. La courbe $I_c$ref correspond à la courbe sinusoïdale de référence pour le courant dans la phase c, et la courbe $I_c$rec correspond à la courbe sinusoïdale obtenue par une fréquence de découpage pour le courant de la phase c.

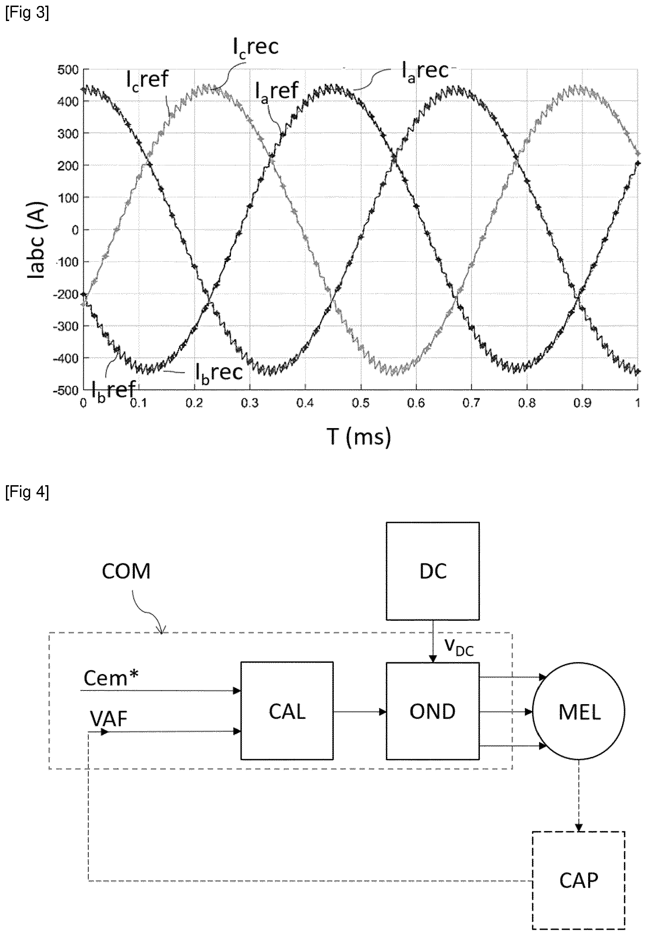

La figure 3 illustre un exemple de courant Iabc dans les phases d'une machine électrique en A en fonction du temps T en ms pour une machine électrique opérant à une fréquence électrique de 1,5 kHz dans le cas d'une fréquence de découpage de 50kHz. La courbe $I_a$ref correspond à la courbe sinusoïdale de référence pour le courant dans la phase a, et la courbe $I_a$rec correspond à la courbe sinusoïdale obtenue par une fréquence de découpage pour le courant de la phase a. La courbe $I_b$ref correspond à la courbe sinusoïdale de référence pour le courant dans la phase b, et la courbe $I_b$rec correspond à la courbe sinusoïdale obtenue par une fréquence de découpage pour le courant de la phase b. La courbe $I_c$ref correspond à la courbe sinusoïdale de référence pour le courant dans la phase c, et la courbe $I_c$rec correspond à la courbe sinusoïdale obtenue par une fréquence de découpage pour le courant de la phase c.

On remarque que la sinusoïde est mieux reconstruite avec une fréquence de découpage élevée. Les déformations du signal sinusoïdal pour les fréquences de découpage plus faibles génèrent une augmentation des pertes dans la machine électrique, voire une perte de contrôle du système.

**Technique antérieure**

Afin de pouvoir opérer à des fréquences de découpage élevées, une solution pourrait être de changer de microprocesseur pour en utiliser un plus performant, capable d'exécuter tous les calculs de la commande à une fréquence de 50 kHz. Toutefois, ce remplacement du microprocesseur implique une hausse de coût importante.

La demande de brevet DE102015214839 décrit un procédé de régulation à temps discret d'une machine électrique, dans lequel une fréquence de régulation est réglée séparément de la fréquence de découpage, et dans lequel un modèle d'impulsion est déterminé pour plusieurs pas de temps. Toutefois, cette demande de brevet reste théorique et ne décrit pas la mise en oeuvre concrète d'une telle méthode au sein d'un procédé de commande.

**Résumé de l'invention**

L'invention a pour but de commander de manière concrète une machine électrique tout en réduisant les pertes d'une machine électrique, et de manière peu onéreuse. Dans ce but, la présente invention concerne un procédé de commande d'une machine électrique pilotée par un onduleur pourvu de bras de commutation. La commande étant réalisée à une fréquence de découpage. Pour ce procédé, on détermine une fréquence de régulation, et à cette fréquence de régulation, on détermine un vecteur de N rapports cycliques de chaque bras de commutation, puis on réalise un démultiplexage de ce vecteur pour déterminer un rapport cyclique de chaque bras de commutation à la fréquence de découpage. On commande ensuite l'onduleur en appliquant à la fréquence de découpage les rapports cycliques démultiplexés. L'utilisation d'une fréquence de régulation inférieure à la fréquence de découpage permet de réaliser la régulation à une fréquence adaptée sans changer de microprocesseur, et la détermination du vecteur de N rapports cycliques puis l'étape de démultiplexage réalisé à la fréquence de découpage permettent de déterminer concrètement la commande de l'onduleur à fréquence élevée, ce qui permet de réduire les pertes de la machine électrique.

En outre, l'invention concerne un système de commande mettant en oeuvre un tel procédé de commande.

L'invention concerne un procédé de commande d'une machine électrique pilotée par un onduleur pourvu d'une pluralité de bras de commutation, ledit procédé de commande étant conçu pour piloter ledit onduleur à une fréquence de découpage. Pour ce procédé, on met en oeuvre les étapes suivantes :

a. On détermine une fréquence de régulation de telle sorte que ladite fréquence de découpage soit proportionnelle à la fréquence de de régulation, un coefficient de proportionnalité entre ladite fréquence de découpage et ladite fréquence de régulation étant un nombre entier ;
b. On détermine à ladite fréquence de régulation N rapports cycliques de chaque bras de commutation dudit onduleur par une méthode de modulation de largeur d'impulsion, ledit nombre N de rapports cycliques étant égal audit coefficient de proportionnalité ;
c. On réalise un démultiplexage desdits N rapports cycliques déterminés pour déterminer un rapport cyclique de chaque bras de commutation dudit onduleur à ladite fréquence de découpage ; et
d. On commande chaque bras de commutation dudit onduleur en appliquant à ladite fréquence de découpage ledit rapport cyclique déterminé par ledit démultiplexage.

Avantageusement, ledit coefficient de proportionnalité est variable.

Selon un mode de réalisation, on détermine lesdits N rapports cycliques de chaque bras de commutation à partir de consignes de tension.

De manière avantageuse, on détermine lesdites consignes de tension à partir de consignes de courant à ladite fréquence de régulation.

De préférence, on détermine lesdites consignes de courant à partir d'au moins une consigne de couple et/ou une consigne de vitesse de rotation.

Selon un aspect, on mesure les courants dans chaque phase de ladite machine électrique, et on applique une transformée de Park audits courants mesurés dans chaque phase de ladite machine électrique, et on détermine lesdites consignes de tension en fonction des courants mesurés exprimés dans le repère de Park.

Conformément à une mise en oeuvre, on mesure la vitesse de rotation mécanique de ladite machine électrique au moyen d'un capteur de position angulaire ou d'un capteur de vitesse de rotation, et on détermine lesdits N rapports cycliques en prenant en compte ladite position angulaire du rotor de ladite machine électrique.

Selon un mode de réalisation, pour la détermination de chacun des N rapports cycliques déterminés, on met en oeuvre une transformée de Park inverse pour laquelle on détermine la position du rotor au moyen de la formule suivante :

$$\theta_k = \theta(t) + \omega * k * T_{pwm}$$

Avec k le numéro du rapport cyclique concerné : k est compris entre 0 et N-1, $\theta$ la position du rotor, $\theta(t)$ la position du rotor de la machine électrique mesurée ou estimée au début de la période de régulation, $\omega$ la vitesse de rotation électrique du rotor de la machine électrique, $T_{pwm}$ la période de découpage déterminée au moyen de la fréquence de découpage.

Selon une configuration, ledit procédé comprend une étape d'injection d'harmoniques de tension.

En outre, l'invention concerne un système de commande d'une machine électrique comprenant un onduleur pourvu de bras de commutation, un calculateur et une mémoire configurée pour mettre en oeuvre les étapes du procédé de commande selon l'une des revendications précédentes, de préférence ladite machine électrique est une machine synchro-réluctante assistée par des aimants permanents ou une machine synchrone à aimants permanents.

Conformément à une mise en oeuvre, chaque bras de commutation dudit onduleur comprend au moins un semi-conducteur à large bande WBG.

D'autres caractéristiques et avantages du procédé selon l'invention, apparaîtront à la lecture de la description ci-après d'exemples non limitatifs de réalisations, en se référant aux figures annexées et décrites ci-après.

## Liste des figures

La figure 1, déjà décrite, illustre des courbes de tension sinusoïdale respectivement de référence et obtenue par une méthode de découpage.

La figure 2, déjà décrite, illustre des courbes sinusoïdales de courant dans les phases respectivement de référence et obtenue par une méthode de découpage.

La figure 3, déjà décrite, illustre des courbes sinusoïdales de courant dans les phases respectivement de référence et obtenue par une méthode de découpage.

La figure 4 illustre un système de commande pour la mise en oeuvre du procédé de commande selon l'invention.

La figure 5 illustre un système de commande pour la mise en oeuvre du procédé selon un mode de réalisation de l'invention.

La figure 6 illustre l'étape de détermination de N rapports cycliques.

La figure 7 illustre l'étape de démultiplexage pour la détermination des rapports cycliques.

La figure 8 illustre l'étape d'ouverture et de fermeture des commutateurs des bras de commutation.

## Description des modes de réalisation

Sur la figure 4 est représentée, schématiquement et de manière non limitative, une installation comprenant une machine électrique tournante MEL associée, pour sa commande, à un système de commande COM selon l'invention (le système de commande COM mettant en oeuvre le procédé de commande selon l'invention). L'installation comporte également une source DC d'énergie électrique, telle qu'un bus de tension continue.

La machine électrique tournante MEL est une machine tournante avec plusieurs phases, de préférence trois phases (alternativement la machine électrique peut comporter un nombre de phases multiple de trois, par exemple six, neuf ou douze, ou encore quatre ou cinq phases). Avantageusement, la machine électrique tournante MEL peut être une machine électrique synchrone. De préférence, la machine électrique synchrone MEL peut être une machine électrique synchrone à aimants permanents ou synchro-réluctante, en particulier une machine tournante triphasée synchro-réluctante assistée d'aimants permanents.

Pour l'exemple illustré (non limitatif), la machine électrique synchrone MEL comporte trois entrées. Chaque entrée correspond à une phase d'un stator (non représenté) de la machine électrique tournante MEL.

Le système de commande COM est destiné à piloter, au cours du temps, l'alimentation de la machine tournante MEL en fonction de valeurs cibles et/ou de valeurs mesurées de grandeurs prédéterminées. Ces valeurs cibles et/ou valeurs mesurées sont appelées dans la suite de la description variables de fonctionnement de la machine électrique. Pour le procédé et le système selon l'invention, le système de commande COM prend en compte une consigne de couple Cem* (qui peut provenir classiquement d'une demande de l'utilisateur de la machine électrique, alternativement cette consigne de couple peut être calculée par une régulation de vitesse), et/ou au moins une autre variable de fonctionnement VAF qui peut être une mesure ou une consigne. On appelle variable de fonctionnement de la machine électrique, une grandeur qui caractérise le fonctionnement de la machine électrique, il peut s'agir notamment d'une variable électrique, comme la tension, le courant, ou la puissance de la machine électrique, une variable mécanique comme la position, la vitesse ou l'accélération du rotor de la machine électrique, etc. Les variables de fonctionnement peuvent par exemple être la vitesse de rotation électrique $\omega_e$ du rotor (non représenté) de la machine électrique (alternativement cette variable peut aussi être la norme du flux magnétique dans les phases), l'amplitude de tension de la machine électrique, l'amplitude du courant de la machine électrique, une température de la machine électrique, etc. On rappelle que la vitesse de rotation électrique $\omega_e$ du rotor correspond à la multiplication de la vitesse de rotation mécanique $\omega_m$ du rotor par le nombre de paires de pôles de la machine électrique synchrone MEL. En d'autres termes, on peut écrire : $\omega_e = p.\omega_m$ avec p le nombre de paires de pôles de la machine électrique synchrone MEL. Cette vitesse de rotation électrique permet de déterminer la fréquence électrique de la machine électrique.

Le système de commande COM comporte un onduleur OND et un calculateur CAL. Le système de commande COM peut utiliser si besoin un capteur CAP de position angulaire et/ou de vitesse de rotation angulaire du rotor de la machine électrique MEL. Un tel capteur permet de déterminer la vitesse de rotation angulaire $\omega_m$ de la machine électrique soit directement (cas d'un capteur de vitesse), soit par dérivation (cas du capteur de position). En outre, le système de commande COM peut comporter des moyens de mesure des courants (non représentés) dans les phases de la machine électrique, par exemple des capteurs de courant.

L'onduleur OND est configuré pour acheminer de l'énergie électrique entre la source DC et la machine électrique synchrone MEL. Plus précisément, l'onduleur OND est configuré pour acheminer de l'énergie électrique entre la source DC et chaque phase du stator de la machine électrique synchrone MEL. La source DC (par exemple une batterie) fournit une tension de bus continu, notée $V_{DC}$.

L'onduleur OND comporte une première entrée reliée à la source DC, et trois sorties, chacune reliée à une phase correspondante du stator de la machine électrique synchrone MEL. L'onduleur OND comporte, en outre, une deuxième entrée électriquement reliée à une sortie du calculateur CAL, de sorte que l'onduleur OND est configuré pour acheminer de l'énergie électrique entre la source DC et la machine électrique synchrone MEL en fonction d'un signal de commande de commutation appliqué par le calculateur CAL à la deuxième entrée de l'onduleur OND.

De préférence, le signal de commande de commutation peut être tel que l'onduleur OND achemine de l'énergie électrique depuis la source DC vers la machine électrique synchrone MEL de sorte que la machine électrique synchrone MEL présente un fonctionnement communément appelé « moteur » et/ou un fonctionnement communément appelé « générateur ». Classiquement, l'onduleur OND comporte plusieurs bras de commutation (non représentés), de préférence au moins un bras de commutation pour chaque phase de la machine électrique, pour transformer le signal continu depuis la source DC en un signal alternatif pour les phases de la machine électrique MEL. Chaque bras de commutation comporte au moins un commutateur commandé. De manière classique, on peut commander chaque commutateur des bras de commutation au moyen d'une modulation de largeur d'impulsion connu sous l'acronyme MLI (ou PWM de l'anglais Pulse Width Modulation).

Le capteur optionnel de position angulaire ou de vitesse de rotation angulaire CAP peut être configuré pour mesurer la position mécanique angulaire d'un rotor (non représenté) de la machine électrique synchrone par rapport au stator (non représenté), et pour délivrer un signal de position angulaire (respectivement de vitesse de rotation angulaire) représentatif de la valeur mesurée de la position angulaire (respectivement de la vitesse de rotation angulaire) du rotor de la machine électrique synchrone.

En outre, le capteur optionnel CAP de position angulaire ou de vitesse de rotation angulaire peut être configuré pour appliquer le signal de position angulaire (respectivement de vitesse de rotation angulaire) à une entrée correspondante du calculateur CAL.

Le procédé de commande d'une machine électrique selon l'invention est conçu pour piloter un onduleur à une fréquence de découpage prédéfinie (constante ou variable, par exemple en fonction de la vitesse de rotation du rotor de la machine électrique), l'onduleur comprenant une pluralité de bras de commutation. On rappelle qu'une fréquence est définie par le nombre de périodes par unité de temps, et la période est la plus petite durée pendant laquelle se reproduit un phénomène. Le procédé de commande d'une machine électrique comprend les étapes suivantes en temps réel :

- Détermination d'une fréquence de régulation, de telle sorte que la fréquence de découpage soit proportionnelle à la fréquence de de régulation, un coefficient de proportionnalité entre la fréquence de découpage et la fréquence de régulation étant un nombre entier,
- Détermination, à la fréquence de régulation, d'une régulation pour N rapports cycliques de chaque bras de commutation de l'onduleur par une méthode de modulation de largeur d'impulsion MLI, le nombre N de rapports cycliques déterminés étant égal au coefficient de proportionnalité,
- Réalisation d'un démultiplexage des N rapports cycliques déterminés pour déterminer un rapport cyclique de chaque bras de commutation de l'onduleur à la fréquence de découpage, et
- Commande de chaque bras de commutation de l'onduleur en appliquant à la fréquence de découpage le rapport cyclique démultiplexé.

Ainsi, la régulation des courants de la machine électrique est mise en oeuvre à une fréquence de régulation qui est inférieure à la fréquence de découpage. L'utilisation d'une fréquence de régulation inférieure à la fréquence de découpage permet de réaliser la régulation à une fréquence adaptée sans changer de microprocesseur, et la détermination du vecteur de N rapports cycliques puis l'étape de démultiplexage réalisé à la fréquence de découpage permettent de déterminer concrètement la commande de l'onduleur à fréquence élevée, ce qui permet de réduire les pertes de la machine électrique.

Ces étapes peuvent être mises en oeuvre notamment par un calculateur et une mémoire informatique dédiés pour les temps réels. Ces étapes sont détaillées dans la suite de la description.

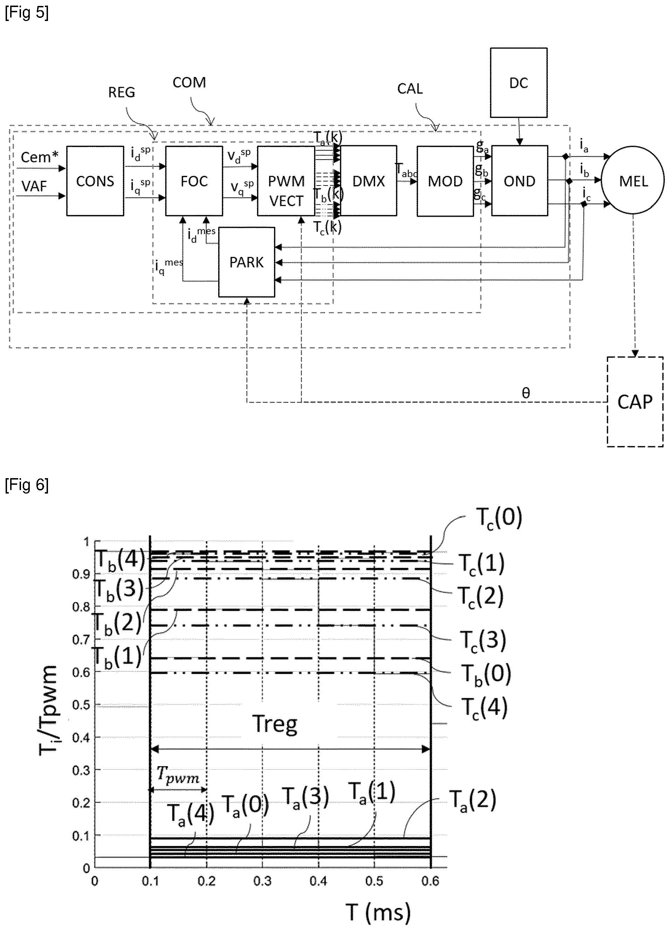

La figure 5 illustre, schématiquement et de manière non limitative, une installation comprenant une machine électrique tournante MEL associée, pour sa commande, à un système de commande COM selon un mode de réalisation de l'invention (le système de commande COM mettant en oeuvre le procédé de commande selon l'invention). La figure 5 est un exemple de réalisation du système de commande de la figure 4. D'autres mises en oeuvre du système de la figure 4 peuvent être réalisées sans sortir du cadre de l'invention (par exemple les réalisations décrites dans les demandes de brevet WO2021/259662 et WO2022/078778 ou dans les demandes de brevet portant les numéros de dépôt FR21/13962 et FR22/00475). Les éléments identiques à la figure 4 ne sont pas redécrits.

Le calculateur CAL utilise des mesures de courant $i_a$, $i_b$, $i_c$ dans les phases de la machine électrique MEL. De plus, le calculateur CAL comprend :

- Des moyens de détermination CONS des consignes de courant $i_d^{sp}$ et $i_q^{sp}$, à partir notamment de la consigne de couple Cem* et de la consigne de la variable de fonctionnement VAF,
- Des moyens de régulation REG mis en oeuvre à la fréquence de régulation avec :

    ○ Des moyens de transformation PARK dans le repère de Park des courants mesurés, pour déterminer des courants mesurés exprimés en courant direct $i_d^{mes}$ et le courant en quadrature $i_q^{mes}$ (pour rappel : les courants et les tensions dits « directs » et « en quadrature », également appelé « quadratique(s) », sont des courants et des tensions exprimés dans un repère tournant lié au rotor), les moyens de transformation PARK peuvent également dépendre d'une mesure de la position angulaire θ du rotor de la machine électrique, qui peut être obtenue par un capteur CAP,
    ○ Des moyens de détermination FOC des consignes de tension $v_d^{sp}$ et $v_q^{sp}$, à partir notamment des consignes de courants $i_d^{sp}$ et $i_q^{sp}$, et des courants mesurés exprimés dans le repère de Park $i_d^{mes}$ et $i_q^{mes}$,
    ○ Des moyens de vectorisation de la modulation de largeur d'impulsion PWM VECT en fonction des consignes de tension $v_d^{sp}$ et $v_q^{sp}$, les moyens de vectorisation de la modulation de largeur d'impulsion déterminent N rapports cycliques $T_a(k)$, $T_b(k)$, $T_c(k)$ pour chaque bras de commutation (avec k valant de 0 à N-1), les moyens de vectorisation de la modulation de largeur d'impulsion PWM VECT peuvent également dépendre d'une mesure de la position angulaire θ du rotor de la machine électrique, qui peut être obtenue par un capteur CAP, ces moyens mettent en oeuvre l'étape 2 décrite ci-dessous,

- Des moyens de démultiplexage DMX des N rapports cycliques déterminés par les moyens de vectorisation de la modulation de largeur d'impulsion PWM VECT, pour déterminer un rapport cyclique de chaque bras de commutation $T_{abc}$ à la fréquence de découpage, ces moyens mettent en oeuvre l'étape 3 décrite ci-dessous,
- Des moyens de commande MOD des commutateurs des bras de commutation de l'onduleur OND à la fréquence de découpage, pour déterminer les états des commutateurs $g_a$, $g_b$, $g_c$ à partir du rapport cyclique de chaque bras de commutation Tabc.

1) Détermination de la fréquence de régulation

Lors de cette étape, on détermine une fréquence de régulation, de telle sorte que la fréquence de découpage soit proportionnelle à la fréquence de régulation. Pour cette proportionnalité, le coefficient de proportionnalité (c'est-à-dire le rapport entre la fréquence de découpage et la fréquence de régulation) est un nombre entier. La fréquence de régulation est la fréquence à laquelle sont mises en oeuvre les étapes de régulation : par exemple les étapes de transformée de Park, de détermination des consignes de tension, etc. Ainsi, ces étapes de régulation ne sont pas réalisées à la fréquence de découpage. Il est donc possible d'augmenter la fréquence de découpage pour limiter les pertes, sans mettre en oeuvre un calculateur spécifique avec un microprocesseur spécifique.

On peut écrire la formule suivante :

$$f_{dec} = K \times f_{reg}$$

Avec $f_{dec}$ la fréquence de découpage, K le coefficient de proportionnalité avec K entier, et $f_{reg}$ la fréquence de régulation.

Conformément à une mise en oeuvre de l'invention, le coefficient de proportionnalité peut être variable. Ainsi, il est possible d'avoir le maximum d'amplitude de variation du découpage effectif.

Selon un mode de réalisation, lorsqu'il est variable, K peut varier entre 1 et 10, de préférence entre 2 et 5. Lorsqu'il est constant, K peut être choisi entre 2 et 10, de préférence entre 2 et 5.

A titre d'exemple non limitatif, la fréquence de régulation peut valoir entre 5 et 15 kHz, et la fréquence de découpage entre 5 et 60 kHz.

2) Détermination du vecteur de N rapports cycliques

Lors de cette étape, on détermine, à chaque période de la fréquence de régulation, N rapports cycliques de chaque bras de commutation par une méthode de modulation de largeur d'impulsion. Un rapport cyclique est le rapport du temps de fermeture d'un commutateur du bras de commutation par rapport à la période de découpage. Chaque rapport cyclique est déterminé par la méthode de largeur d'impulsion pour former un signal sinusoïdal. Le nombre N de rapports cycliques est égal au coefficient de proportionnalité entre la fréquence de découpage et la fréquence de régulation. Ainsi, lors de cette étape, on détermine un vecteur qui comporte N valeurs consécutives des rapports cycliques pour chaque bras de commutation. De cette manière, on détermine tous les rapports cycliques consécutifs des commutateurs de la période de régulation. Autrement dit, le vecteur comprend un nombre de valeurs qui correspond à la multiplication de N par le nombre de bras de commutation de l'onduleur (qui correspond au nombre de phases de la machine électrique). Au sein de ce vecteur, chaque valeur est identifiée avec le bras de commutation concerné ainsi que la période de découpage concernée au sein de la période de régulation.

Selon un mode de réalisation, on peut mesurer la position angulaire du rotor de la machine électrique au moyen d'un capteur de position angulaire ou d'un capteur de vitesse de rotation. En variante, on peut estimer la position angulaire du rotor de la machine électrique au moyen d'un estimateur, un tel estimateur peut dépendre notamment des consignes de tensions et/ou courants et/ou de tensions et/ou courants mesurés.

Pour l'une ou l'autre des mises en oeuvre décrites ci-dessus, on peut déterminer les N rapports cycliques en prenant en compte ladite position angulaire du rotor de ladite machine électrique. Ainsi, on peut déterminer la position du rotor à chaque période de découpage au sein de la période de régulation, et la détermination des N rapports cycliques peut alors être ajustée à la position angulaire du rotor.

Conformément à une mise en oeuvre de l'invention, pour la détermination de chacun des N rapports cycliques déterminés, on peut mettre en oeuvre N transformées de Park inverse pour déterminer le repère tournant lié au rotor (le repère de Park). De cette manière, on peut appliquer les rapports cycliques adaptés à chacun des N rapports cycliques. Dans ce cas, on peut déterminer la position du rotor de la machine électrique au moyen de la formule suivante :

$$\theta_k = \theta(t) + \omega * k * T_{pwm}$$

Avec k le numéro du rapport cyclique concerné : k est compris entre 0 et N-1, $\theta$ la position du rotor, $\theta(t)$ la position du rotor de la machine électrique mesurée ou estimée au début de la période de régulation, $\omega$ la vitesse de rotation électrique du rotor de la machine électrique, $T_{pwm}$ la période de découpage déterminée au moyen de la fréquence de découpage.

La figure 6 illustre, schématiquement et de manière non limitative, les rapports cycliques déterminés à la fréquence de régulation pour un exemple d'application du procédé selon l'invention. Les rapports cycliques sont indiqués Ti/Tpwm, avec i représentant une des phases de la machine électrique. Pour l'exemple, i peut être choisi par les trois phases a, b et c de la machine électrique (correspondant aux bras de l'onduleur). Pour cet exemple, le coefficient de proportionnalité, et a fortiori le nombre N, valent 5. Ainsi, la période de régulation Treg vaut 5 périodes de découpage Tpwm. Pour une meilleure lisibilité de la figure, la période de régulation Treg débute à 0,1 ms. A cet instant, on détermine un vecteur des N rapports cycliques de chaque phase. Ce vecteur comprend les rapports cycliques de la phase a pour les N périodes de découpage de la période de régulation, ces rapports cycliques sont notés Ta(0) à Ta(4) et les valeurs sont représentées par des segments continus. Ce vecteur comprend également les rapports cycliques de la phase b pour les N périodes de découpage de la période de régulation, ces rapports cycliques sont notés Tb(0) à Tb(4) et les valeurs sont représentées par des segments pointillés. Ce vecteur comprend en outre les rapports cycliques de la phase c pour les N périodes de découpage de la période de régulation, ces rapports cycliques sont notés Tc(0) à Tc(4) et les valeurs sont représentées par des segments discontinus ayant une alternance de tirets et de points.

Conformément à une mise en oeuvre, la fonction de modulation de largeur d'impulsion peut comprendre l'injection d'harmoniques de tensions pour compenser des harmoniques de courants ou de couple. Pour cette mise en oeuvre, un critère peut être de prédire, notamment en boucle ouverte, à l'horizon de temps de la période de régulation, la compensation des harmoniques souhaitée.

3) Démultiplexage

Lors de cette étape, on réalise un démultiplexage des N rapports cycliques déterminées à l'étape 2, pour déterminer à la fréquence de découpage un rapport cyclique de chaque bras de commutation de l'onduleur. Le démultiplexage consiste à distribuer sur une voie successivement dans le temps des signaux (ici chaque bras de commutation) ayant préalablement été regroupés (en l'occurrence au sein d'un vecteur de N rapports cycliques). En d'autres termes, pour chaque période de la fréquence de découpage (au sein de la fréquence de régulation) et pour chaque bras de commutation, on détermine un rapport cyclique depuis le vecteur des N rapports cycliques. Cette étape est mise en oeuvre à la fréquence de découpage, par conséquent à une fréquence plus élevée que la fréquence de régulation. Autrement dit, à chaque période de découpage et pour chaque bras de commutation, on identifie au sein du vecteur de N rapports cycliques le rapport cyclique qui correspond à la période de découpage considérée et au bras de commutation considéré.

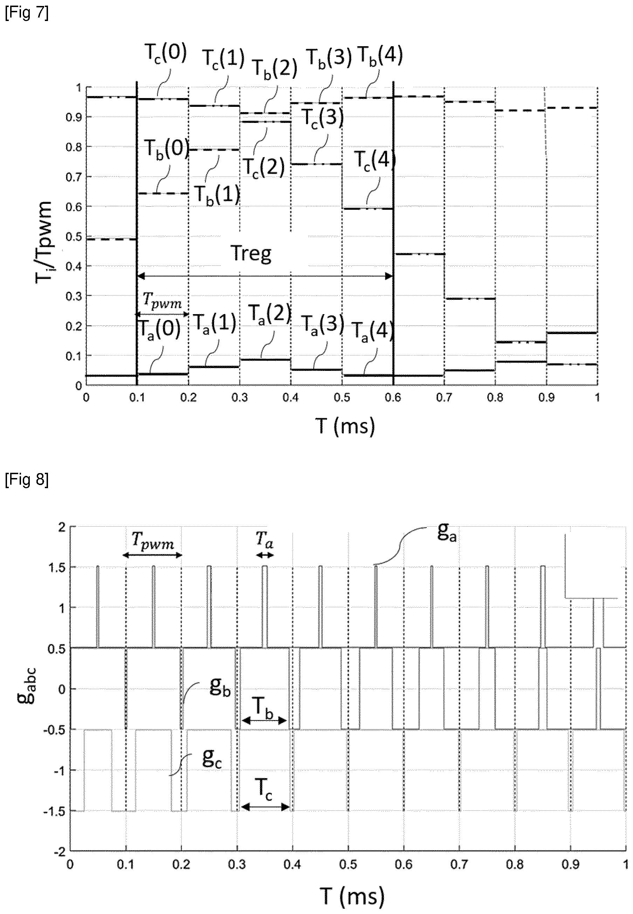

La figure 7 illustre, schématiquement et de manière non limitative, les rapports cycliques Ti/Tpwm de chaque bras de commutation en fonction du temps T en ms. La figure 7 correspond à l'exemple de la figure 6. Les rapports cycliques sont indiqués Ti/Tpwm, avec i représentant une des phases de la machine électrique. Pour l'exemple, la phase i peut être choisie parmi les trois phases a, b et c. Pour cet exemple, le coefficient de proportionnalité, et a fortiori le nombre N, valent 5. Ainsi, la période de régulation Treg vaut 5 périodes de découpage Tpwm. Pour une meilleure lisibilité de la figure, la période de régulation Treg débute à 0,1 ms. A cet instant, on applique une étape de démultiplexage du vecteur de N rapports cycliques. L'étape de démultiplexage permet de générer les rapports cycliques de la phase a pour les N périodes de découpage de la période de régulation, ces rapports cycliques sont notés Ta(0) à Ta(4), et les valeurs sont représentées par des segments continus. Cette étape de démultiplexage permet également de générer les rapports cycliques de la phase b pour les N périodes de découpage de la période de régulation, ces rapports cycliques sont notés Tb(0) à Tb(4), et les valeurs sont représentées par des segments pointillés. Cette étape permet en outre de générer les rapports cycliques de la phase c pour les N périodes de découpage de la période de régulation, ces rapports cycliques sont notés Tc(0) à Tc(4), et les valeurs sont représentées par des segments discontinus ayant une alternance de tirets et de points.

#### 4) Commande de l'onduleur

Lors de cette étape, on commande chaque bras de commutation de l'onduleur, en appliquant à la fréquence de découpage le rapport cyclique déterminé à l'étape 3. Cette étape est mise en oeuvre à la fréquence de découpage. En d'autres termes, on applique à chaque commutateur des bras de commutation une consigne d'ouverture et/ou de fermeture de manière à correspondre au rapport cyclique déterminé. De cette manière, l'onduleur génère un signal de courant de commande de la machine proche d'un signal sinusoïdal.

Selon une option de réalisation, la commande peut être symétrique (qui correspond à la méthode de modulation de largeur d'impulsion classique) ou asymétrique. Une telle méthode asymétrique, permet deux commandes des commutateurs des bras de commutation dans une unique période de découpage. Un exemple de commande asymétrique est décrit notamment dans le paragraphe 3.6 du document suivant : Holmes, Grahame. (2003). Puise Width Modulation for Power Converters : Principles and Practice.

L'invention permet d'appliquer une commande asymétrique sans augmenter la fréquence de régulation.

La figure 8, illustre schématiquement et de manière non limitative, les états d'ouverture et de fermeture $g_{abc}$ des commutateurs des phases a, b et c en fonction du temps T en ms pour l'exemples des figures 6 et 7. Pour une meilleure lisibilité, les états des commutateurs des différentes phases sont illustrés à des valeurs différentes. Pour la phase a (courbe $g_a$), le commutateur est fermé à la valeur 1,5 et ouvert à la valeur 0,5. La durée de fermeture $T_a$ correspond au rapport cyclique déterminé à l'étape précédente multiplié par la période de découpage Tpwm. Pour la phase b (courbe $g_b$), le commutateur est fermé à la valeur 0,5 et ouvert à la valeur -0,5. La durée de fermeture $T_b$ correspond au rapport cyclique déterminé à l'étape précédente multiplié par la période de découpage Tpwm. Pour la phase c (courbe $g_c$), le commutateur est fermé à la valeur -0,5 et ouvert à la valeur -1,5. La durée de fermeture $T_c$ correspond au rapport cyclique déterminé à l'étape précédente multiplié par la période de découpage Tpwm.

En outre, le procédé selon l'invention peut mettre en oeuvre les étapes suivantes (illustrées notamment sur les figures 4 et 5, ou dans les demandes de brevet WO2021/259662 et WO2022/078778, ou dans les demandes de brevet portant les numéros de dépôt FR21/13962 et FR22/00475), en temps réel :

 a. On détermine, au moyen du calculateur, des consignes de courant en fonction d'au moins une consigne de couple et/ou d'une consigne de vitesse de rotation et/ou d'une variable de fonctionnement ;
 b. On détermine, au moyen du calculateur, des consignes de tension à partir des consignes de courant déterminées, à la fréquence de régulation ;
 c. On détermine, à la fréquence de régulation, un vecteur de N rapports cycliques des bras de commutation en fonction des consignes de tension déterminées ;
 d. On réalise un démultiplexage, à la fréquence de découpage, pour générer les rapports cycliques de chaque bras de commutation,
 e. On génère, au moyen du calculateur, un signal de commande de commutation de l'onduleur à partir des rapports cycliques déterminés, à la fréquence de découpage ; et
 f. On commande l'onduleur au moyen du signal de commutation généré.

Ainsi, on peut commander l'onduleur avec une fréquence de découpage élevée qui limite les pertes, tout en conservant les étapes de régulation à une fréquence de régulation plus faible, ce qui limite les besoins en capacité informatique du calculateur (notamment du microprocesseur du calculateur).

Selon un mode de réalisation de l'invention, on peut mesurer les courants dans chaque phase de la machine électrique, et on peut appliquer une transformée de Park aux courants mesurés. Cette transformée de Park peut être mise en oeuvre à la fréquence de régulation. Cette transformée de Park permet de définir les courants mesurés dans le repère de Park qui est un repère tournant lié au rotor.

Pour ce mode de réalisation, on peut déterminer les consignes de tension en fonction des courants mesurés exprimés dans le repère de Park. Ainsi, l'étape de détermination des consignes de tension peut dépendre des consignes de courant et des courants mesurés.

En outre, l'invention concerne un système de commande d'une machine électrique synchrone comprenant un onduleur pourvu de bras de commutation, un calculateur et une mémoire configurée pour mettre en oeuvre les étapes du procédé de commande selon l'une quelconque des variantes précédentes ou selon l'une quelconque des combinaisons de variantes précédentes, pour appliquer la fréquence de découpage à l'onduleur, et pour appliquer une régulation à la fréquence de régulation.

De préférence, la machine électrique peut être une machine synchro-réluctante assistée par des aimants permanents ou une machine synchrone à aimants permanents.

De manière avantageuse, les bras de commutation de l'onduleur peuvent comprendre des semi-conducteurs à large bande des modules de puissance de type WBG (« wide band gap »), qui génèrent nettement moins de pertes à chaque période de découpage. En effet, la présente invention permet une fréquence de découpage adaptée pour ces commutateurs. En variante, les modules de puissance peuvent être du type IGBT ou MOSFET.

Conformément à une mise en oeuvre, le système de commande peut être notamment conforme au mode de réalisation des figures 4 et 5. Toutefois, le système de commande peut être adapté à d'autres modes de réalisation, par exemple ceux décrits dans les demandes de brevet WO2021/259662 et WO2022/078778, ou dans les demandes de brevet portant les numéros de dépôt FR21/13962 et FR22/00475.

Comme il va de soi, l'invention ne se limite pas aux seules formes de réalisation, décrits ci-dessus à titre d'exemple, elle embrasse au contraire toutes les variantes de réalisation.

**Revendications**

1. Procédé de commande d'une machine électrique (MEL) pilotée par un onduleur (OND) pourvu d'une pluralité de bras de commutation, ledit procédé de commande étant conçu pour piloter ledit onduleur (OND) à une fréquence de découpage, **caractérisé en ce qu'**on met en oeuvre les étapes suivantes :

   a. On détermine une fréquence de régulation de telle sorte que ladite fréquence de découpage soit proportionnelle à la fréquence de de régulation, un coefficient de proportionnalité entre ladite fréquence de découpage et ladite fréquence de régulation étant un nombre entier ;
   b. On détermine (PWM VECT) à ladite fréquence de régulation N rapports cycliques de chaque bras de commutation dudit onduleur par une méthode de modulation de largeur d'impulsion, ledit nombre N de rapports cycliques étant égal audit coefficient de proportionnalité ;
   c. On réalise un démultiplexage (DMX) desdits N rapports cycliques déterminés pour déterminer un rapport cyclique de chaque bras de commutation dudit onduleur à ladite fréquence de découpage ; et
   d. On commande (MOD) chaque bras de commutation dudit onduleur (OND) en appliquant à ladite fréquence de découpage ledit rapport cyclique déterminé par ledit démultiplexage (DMX).

2. Procédé de commande selon la revendication 1, dans lequel ledit coefficient de proportionnalité est variable.

3. Procédé de commande selon l'une des revendications précédentes, dans lequel on détermine (PWM VECT) lesdits N rapports cycliques de chaque bras de commutation à partir de consignes de tension.

4. Procédé de commande selon la revendication 3, dans lequel on détermine lesdites consignes de tension (FOC) à partir de consignes de courant à ladite fréquence de régulation.

5. Procédé de commande selon la revendication 4, dans lequel on détermine lesdites consignes de courant (CONS) à partir d'au moins une consigne de couple et/ou une consigne de vitesse de rotation.

6. Procédé de commande selon l'une des revendications 3 ou 4, dans lequel on mesure les courants dans chaque phase de ladite machine électrique, et on applique une transformée de Park (PARK) audits courants mesurés dans chaque phase de ladite machine électrique, et on détermine lesdites consignes de tension en fonction des courants mesurés exprimés dans le repère de Park.

7. Procédé de commande selon l'une des revendications précédentes, dans lequel on mesure la vitesse de rotation mécanique de ladite machine électrique au moyen d'un capteur (CAP) de position angulaire ou d'un capteur de vitesse de rotation, et on détermine (PWM VECT) lesdits N rapports cycliques en prenant en compte ladite position angulaire du rotor de ladite machine électrique.

8. Procédé de commande selon l'une des revendications précédentes, dans lequel pour la détermination de chacun des N rapports cycliques déterminés, on met en oeuvre une transformée de Park inverse pour laquelle on détermine la position du rotor au moyen de la formule suivante :

$$\theta_k = \theta(t) + \omega * k * T_{pwm}$$

Avec k le numéro du rapport cyclique concerné : k est compris entre 0 et N-1, $\theta$ la position du rotor, $\theta(t)$ la position du rotor de la machine électrique mesurée ou estimée au début de la période de régulation, $\omega$ la vitesse de rotation électrique du rotor de la machine électrique, $T_{pwm}$ la période de découpage déterminée au moyen de la fréquence de découpage.

9. Procédé de commande selon l'une des revendications précédentes, dans lequel ledit procédé comprend une étape d'injection d'harmoniques de tension.

**10.** Système de commande d'une machine électrique (MEL) comprenant un onduleur (OND) pourvu de bras de commutation, un calculateur (CAL) et une mémoire configurée pour mettre en oeuvre les étapes du procédé de commande selon l'une des revendications précédentes, de préférence ladite machine électrique (MEL) est une machine synchro-réluctante assistée par des aimants permanents ou une machine synchrone à aimants permanents.

**11.** Système de commande selon la revendication 10, dans lequel chaque bras de commutation dudit onduleur (OND) comprend au moins un semi-conducteur à large bande WBG.

[Fig 1]

[Fig 2]

[Fig 3]

[Fig 4]

[Fig 5]

[Fig 6]

[Fig 7]

[Fig 8]

Europäisches
Patentamt

European
Patent Office

Office européen
des brevets

# RAPPORT DE RECHERCHE EUROPEENNE

Numéro de la demande

**EP 23 21 2614**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | DE 10 2015 214839 A1 (SCHAEFFLER TECHNOLOGIES AG [DE]) 9 février 2017 (2017-02-09) * abrégé * ----- | 1-11 | INV. H02P27/08 |
| A | FR 3 112 043 A1 (IFP ENERGIES NOW [FR]) 31 décembre 2021 (2021-12-31) * abrégé; figures 1,2 * ----- | 1-11 | |
| A | FR 2 911 698 A1 (AIRBUS FRANCE SAS [FR]) 25 juillet 2008 (2008-07-25) * abrégé; figure 1 * ----- | 1-11 | |

**DOMAINES TECHNIQUES RECHERCHES (IPC)**

H02P

Le présent rapport a été établi pour toutes les revendications

| Lieu de la recherche | Date d'achèvement de la recherche | Examinateur |
|---|---|---|
| Munich | 6 mai 2024 | Hascher, Thierry |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.....................................................................................
& : membre de la même famille, document correspondant

EPO FORM 1503 03.82 (P04C02)

**EP 4 387 084 A1**

## ANNEXE AU RAPPORT DE RECHERCHE EUROPEENNE
## RELATIF A LA DEMANDE DE BREVET EUROPEEN NO.

EP 23 21 2614

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-05-2024

| Document brevet cité au rapport de recherche | Date de publication | Membre(s) de la famille de brevet(s) | Date de publication |
|---|---|---|---|
| DE 102015214839 A1 | 09-02-2017 | CN 106452220 A<br>DE 102015214839 A1 | 22-02-2017<br>09-02-2017 |
| FR 3112043 A1 | 31-12-2021 | EP 4173130 A1<br>FR 3112043 A1<br>WO 2021259662 A1 | 03-05-2023<br>31-12-2021<br>30-12-2021 |
| FR 2911698 A1 | 25-07-2008 | FR 2911698 A1<br>US 2009021196 A1 | 25-07-2008<br>22-01-2009 |

EPO FORM P0460

Pour tout renseignement concernant cette annexe : voir Journal Officiel de l'Office européen des brevets, No.12/82

16

# EP 4 387 084 A1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3051296 A1
- DE 102015214839
- WO 2021259662 A
- WO 2022078778 A
- FR 2113962
- FR 2200475

**Littérature non-brevet citée dans la description**

- **HOLMES ; GRAHAME.** *Puise Width Modulation for Power Converters : Principles and Practice,* 2003